# EUROPÄISCHE PATENTANMELDUNG

(11) **EP 0 881 741 A1**
(43) Veröffentlichungstag der Anmeldung: **02.12.1998**
(21) Anmeldenummer: 97108656.6
(22) Anmeldetag: 30.05.1997
(51) Int. Cl.: H02J 13/00

(54) **Verfahren zur Programmierung eines Rundsteuerempfängers**

(71) Anmelder: Enermet AG, 8320 Fehraltorf (CH)
(72) Erfinder: Warmerdam, Petrus, 8620 Wetzikon (CH); Zürcher, Stefan, 8500 Frauenfeld (CH)
(74) Vertreter: Blum, Rudolf Emil Ernst

(57) **Zusammenfassung**

Ein Rundsteuerempfänger wird mit einer Schnittstelle (4) zur Programmierung des Speichers des Rundsteueremfpängers und mit einem auswechselbaren Speicher (11) ausgestattet. Die Programmierung erfolgt wahlweise durch Programmierung des Speichers (11) über die Schnittstelle (4) oder durch Austausch des Speichers (11) gegen einen extern vorprogrammierten Speicher.

## Beschreibung

Die Erfindung betrifft ein Verfahren zur Programmierung eines Rundsteuerempfängers. Ferner betrifft die Erfindung einen Rundsteuerempfängers zur Durchführung des Verfahrens.

Bei der Rundsteuerung wird das elektrische Verteilnetz als Übertragungskanal für Signale (Rundsteuertelegramme) verwendet, insbesondere zur Steuerung von Verbrauchern zur Erzielung eines möglichst optimalen Lastmanagements im Verteilnetz. Die Signale werden in das Netz eingespiesen (üblicherweise in Mittelspannungs-Sammelschienen in einem Unterwerk)und verbreiten sich über das elektrische Netz bis zu den einzelnen Rundsteuerempfängern, welche die Signale empfangen, verarbeiten und die zugeordneten Lasten schalten, in der Regel mittels im Rundsteuerempfänger eingebauten Relais. Die Rundsteuerempfänger umfassen einen Speicher mit kundenspezifischen Daten, die es dem Empfänger ermöglichen, auf das für ihn bestimmte Signal in vorausbestimmter Weise zu reagieren, z.B. einen bestimmten von mehreren angeschlossenen Verbrauchern zu aktivieren oder zu deaktivieren. Die Programmierung dieser Daten muss auf Kundenwunsch erstellt und auch geändert werden können.

Bei den Rundsteuerempfängern haben sich zwei verschiedene Arten der Programmierung entwickelt.Es sind einerseits Rundsteuerempfänger bekannt, welche zur Programmierung bzw. Umprogrammierung mit einem auf der Platine der Steuerelektronik auswechselbaren extern programmierten Speicherchip versehen sind. Andererseits wurden frei programmierbare Rundsteuerempfänger bekannt, welche mit einer optischen oder galvanischen Schnittstelle versehen sind, die eine Programmierung bzw. Umprogrammierung eines fest eingebauten Speichers zulässt, also ohne dass Speicherchips ausgetauscht werden. Die Rundsteuerempfänsteuerempfänger nach Stand der Technik sind entweder in der einen oder der anderen Art ausgeführt. Bei den Verwendern von Rundsteuerempfängern der ersten Art können eine Reihe von Speicherelementen vorhanden sein, welche für verschiedene alternative Steuerungsaufgaben ausgewechselt werden; es wäre für diese Verwender attraktiv, auf die moderneren, frei programmierbaren Rundsteuerempfänger umzustellen, da ein Wechsel zu den moderneren, frei programmierbaren Rundsteuerempfängern mit ihrer einfacheren Programmierung grundsätzlich wünschenswert ist. Ein Wechsel von der einen Geräteart zu der anderen bedingt aber eine Umstellung der gesamten Progammierungslogistik und der entsprechenden Organisation und ist daher entsprechend aufwendig und wird in der Regel nicht durchgeführt.

Der Erfindung liegt deshalb die Aufgabe zugrunde, ein Verfahren zur Programmierung von Rundsteuerempfängern zu schaffen, welches diese Nachteile nicht aufweist. Diese Aufgabe wird durch ein Verfahren mit den kennzeichnenden Merkmalen des Anspruchs 1 gelöst.

Dadurch, dass gemäss dem Verfahren die Programmierung des Rundsteuerempfängers wahlweise durch die Auswechslung des Speichers bzw. eines Speicherteils oder durch Programmierung des auswechselbaren Speichers bzw. Speicherteils über die Schnittstelle des Empfängers erfolgt, kann je nach Wunsch des Verwenders des Rundsteuerempfängers für die jeweilige Verwendungssituation die beste Programmierungswahl getroffen werden. Da über die Schnittstelle ein auswechselbarer Speicherteil programmierbar ist, können an Ort, d.h. beim Empfängerstandort, auch wechselbare Speicherteile programmiert werden, welche dann einfach durch Auswechslung zum Einsatz gebracht werden können.

Der Erfindung liegt weiter die Aufgabe zugrunde, einen Rundsteuerempfänger zu schaffen, der die erwähnten Nachteile der bekannten Rundsteuerempfänger nicht aufweist. Diese Aufgabe wird durch einen Rundsteuerempfänger mit den kennzeichnenden Merkmalen des Anspruchs 5 gelöst.

Dadurch, dass der Rundsteuerempfänger sowohl durch Auswechslung eines Speichers bzw. eines Speicherteils als auch durch Programmierung dieses Speichers bzw. Speicherteils über die Schnittstelle des Empfängers programmierbar ist, kann wahlweise die Programmierung auf die für den Verwender des Empfängers oder das Anwendungsgebiet günstigste Weise erfolgen.

Nachfolgend werden Ausführungsbeispiele der Erfindung anhand der Zeichnungen näher erläutert. Dabei zeigt
- Figur 1: grob schematisch in perspektivischer Ansicht einen Rundsteuerempfänger mit einem in diesen einsteckbaren Speicherteil;
- Figur 2: eine Draufsicht auf ein Gehäuseoberteil eines Rundsteuerempfängers;
- Figur 3: eine teilweise vertikal geschnittene Ansicht des Gehäuseoberteils von Figur 2;
- Figur 4: eine Draufsicht auf ein das Speicherteil des Rundsteuerempfängers tragendes Einschubelement; und
- Figur 5: einen Vertikalschnitt durch das Einschubelement von Figur 4.

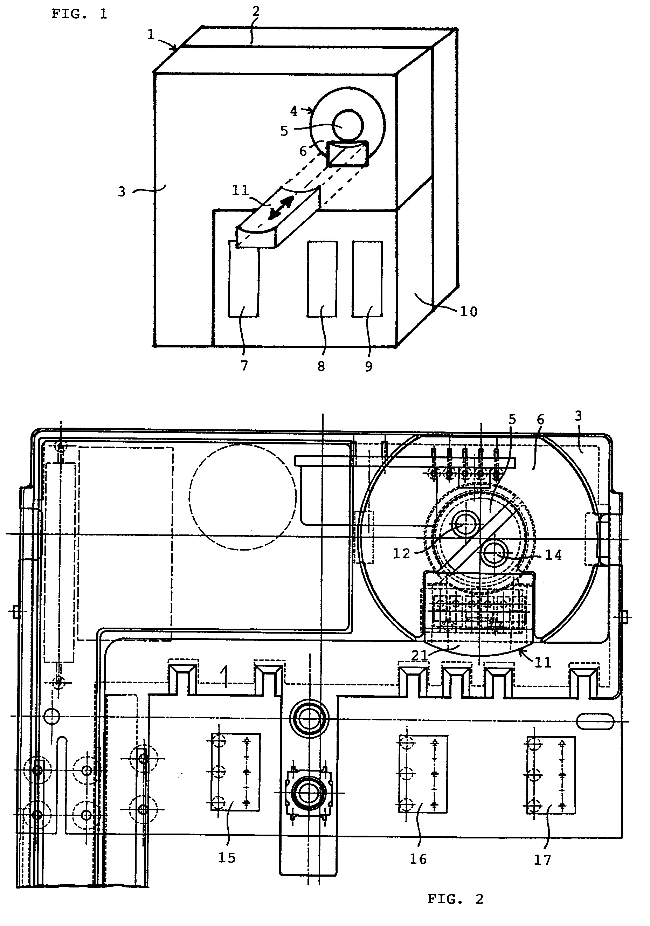

Figur 1 zeigt in stark vereinfachter Form eine Ansicht eines Rundsteuerempfängers 1. Dieser ist lediglich als Ausführungsbeispiel dargestellt; die Erfindung lässt sich natürlich an beliebig gestalteten Rundsteuerempfängern verwirklichen. Der dargestellte Empfänger 1 weist ein Gehäuse 2 mit einem vorderen Gehäuseteil 3 auf. An diesem ist in bekannter Weise das Fenster 5 einer optischen Schnittstelle 4 vorgesehen, an welcher der Sende-/Empfangskopf eines Programmiergerätes (in der Regel ein tragbarer Personalcomputer) befestigbar ist. Der das Fenster 5 der Schnittstelle 4 umgebende Ring 6 kann zur Fixierung des Kopfes magnetisch ausgestaltet sein. Anstelle einer optischen Schnittstelle kann auch eine galvanische Schnittstelle vorgesehen sein. Im gezeigten Beispiel ist weiter ein Einschub 11 dargestellt, der in eine Öffnung im Gehäuse 2 in dieses einschiebbar und auch wieder herausziehbar ist. Die Gehäuseöffnung ist bei geschlossenem Gehäuse zugänglich, d.h. das Gehäuse muss zum Auswechseln des Einschubs 11 nicht geöffnet und geschlossen werden. Es kann allerdings auch über der Schnittstelle und der Gehäuseöffnung ein Deckel, vorzugsweise ein durchsichtiger Deckel, vorgesehen sein. Bei einer solchen Ausführung würde sich also der Deckel 10 über die Schnittstelle und die Relais erstrecken. Der Einschub 11 trägt den Speicher oder mindestens einen Teil des programmierbaren Speichers des Rundsteuerempfängers. Dieser Speicher steht in eingeschobenem Zustand des Einschubs 11 in Kontakt mit der restlichen Steuerungselektronik des Rundsteuerempfängers und bildet einen Teil von dieser; bei herausgezogenem Einschub 11 fehlt der Speicher oder ein Teil des Speichers des Rundsteuerempfängers 1 und dieser ist nicht funktionsbereit. Im gezeigten Beispiel sind weiter drei Relais 7, 8, 9 auf bekannte Weise an Relaissteckplätzen im Gehäuse 2 angeordnet und z.B. durch einen durchsichtigen Deckel 10 des Gehäuses abgedeckt. Dies kann der gleiche Deckel sein, der auch die Schnittstelle und die Einschuböffnung abdeckt.

Die Programmierung des Rundsteuerempfängers 1 erfolgt nun wahlweise derart, dass ein bereits programmierter Speicher oder Speicherteil mit dem Einschub 11 in den Empfänger 1 eingeschoben wird. Mit den Daten (Programm) im eingeschobenen Speicher oder Speicherteil ist der Rundsteuerempfänger funktionstüchtig und kann die für ihn bestimmten Rundsteuertelegramme identifizieren, auswerten und die entsprechenden Befehle ausführen. Wahlweise erfolgt die Programmierung aber auf andere Art. Dazu wird ebenfalls der Einschub 11 mit dem Speicher oder Speicherteil in den Empfänger eingeschoben. Der Speicher ist in diesem Fall aber leer oder enthält ein nicht mehr benötigtes Programm. Nach dem Einführen des Einschubs 11 wird auf bekannte Weise ein Programmiergerät an die Schnittstelle 4 angeschlossen und mindestens der Speicher oder Speicherteil des Empfängers 1, der sich im Einschub 11 befindet, wird neu programmiert. Nach dem Abschluss der Programmierung ist der Empfänger 1 funktionsfähig. Der Empfänger 1 verhält sich also wahlweise wie ein durch Speicherauswechslung programmierbarer Empfänger oder ein frei programmierbarer Empfänger, wobei im letzteren Fall jedenfalls der auswechselbare Speicher oder Speicherteil als zu programmierender Speicher dient, auch wenn im Empfänger noch weitere Speicherteile vorgesehen sein können, die allenfalls auch über die Schnittstelle programmierbar sind.

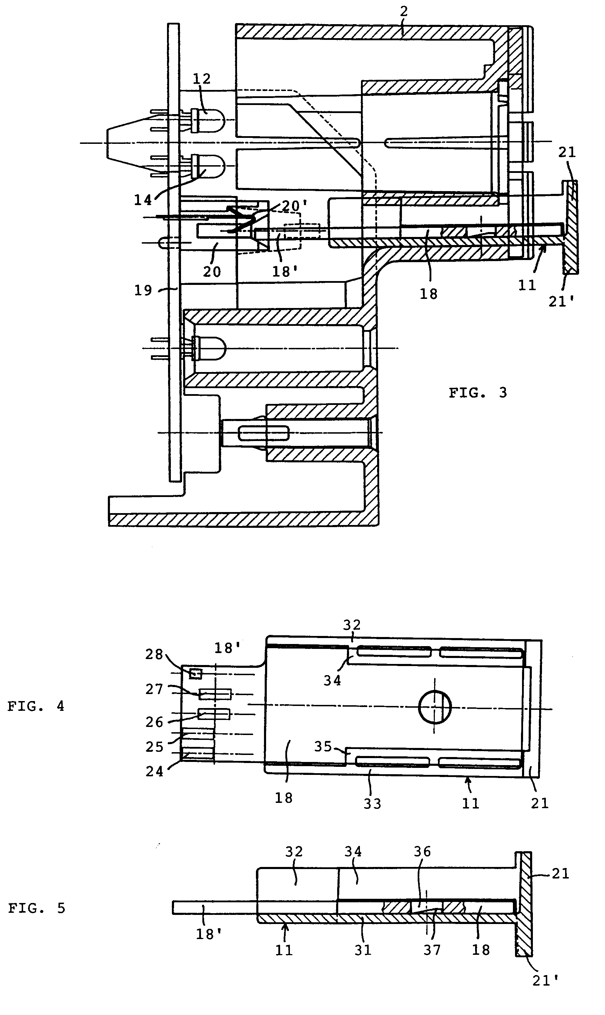

Figur 2 zeigt eine Draufsicht auf einen Teil des Gehäuseoberteils 3 eines Rundsteuerempfängers ähnlich desjenigen von Figur 1, wobei z.T. auch nicht sichtbare, hinter dem Gehäuseoberteil angeordnete Teile des Empfängers dargestellt sind. Figur 3 zeigt einen Vertikalquerschnitt durch das Gehäuseoberteil von Figur 2. Im Gehäuseoberteil ist die optische Schnittstelle 4 mit der magnetischen Fläche 6 und dem Fenster 5 angeordnet. Hinter diesem sind die Sende- bzw. Empfangselemente 12, 14 (Leuchtdiode bzw. Photodiode oder Phototransistor) der optischen Schnittstelle vorgesehen. Die Öffnung für den Einschub 11 (in Figur 3 teilweise eingeschoben bzw. teilweise herausgezogen dargestellt) ist innerhalb der magnetischen Fläche 6 nahe beim Fenster 5 angeordnet. Der Einschub weist ein Einschubgehäuse auf und bildet eine Halterung für eine Leiterplatte 18, die den oder die Speicherchips trägt, welche nicht dargestellt sind. Auf der Vorderseite ist der Einschub mit einer Stirnwand 21 versehen, die die Einschuböffnung am Gehäuse des Empfängers abdeckt und z.B. zur Beschriftung des Einschubes dient. An ihrer Unterseite ist die Stirnwand 21 mit einem in der Einschubstellung des Einschubs vorstehenden Abschnitt 21' versehen, der das Herausziehen des Einschubs 11 erleichtert. Der Einschub ist so ausgebildet, dass ein Einsetzen im Gehäuse nur in einer vorbestimmten Lage möglich ist, um eine Fehlbedienung zu verunmöglichen. In Figur 1 ist dies durch die entsprechende Formgebung von Einschub und Einschuböffnung dargestellt.

Bei eingeschobenem Einschub bzw. Halterung 11 wird der hintere Bereich 18' der Leiterplatte 18 von einer auf der Hauptplatine 19 des Empfängers 1 angeordneten Buchse 20 aufgenommen, in welcher Kontaktfedern 20' auf der Leitplatte angeordnete Kontaktstreifen beaufschlagen, so dass der Kontakt der elektrischen Bausteine, insbesondere des Speicherchips, auf der Leiterplatte 18 mit der übrigen Elektronik des Empfängers 1 auf der Hauptplatine 19 hergestellt wird. Im unteren Bereich des Gehäuseoberteils 2 sind die Steckplätze 15, 16 und 17 für die Relais angeordnet.

Die Figuren 4 und 5 zeigen einen Einschub bzw. eine Halterung 11 in Draufsicht bzw. in teilweise vertikal geschnittener Seitenansicht. Gleiche Bezugszeichen wie bisher verwendet bezeichnen dabei die selben Teile. Der Einschub 11 weist ein Bodenteil 31 sowie Seitenteile 32, 33 und die Stirnwand 21 auf. Im Innern des Einschubs 11 vorspringende Abschnitte 34, 35 der Seitenteile 32, 33 bilden mit dem Bodenteil 31 jeweils eine Nut zur Führung der Leiterplatte 18. Eine am Bodenteil 31 angeordnete, vorzugsweise einseitig rampenförmige Ausformung 37 bildet mit einer lagekorrespondierenden Ausnehmung 36 in der Leiterplatte 18 eine Fixierung für dieselbe im Einschub 11, wenn die Leiterplatte zwischen den Seitenwänden und dem Boden des Einschubs eingeführt worden ist, wodurch sich eine sichere Halterung der Leiterplatte ergibt. Die Seitenteile 32, 33 bilden mit dem Boden 31 eine Führung für den Einschub im Gehäuse 2, dessen Einschuböffnung mit entsprechenden Flächen oder Führungen versehen ist, so dass das Einschieben des Einschubs im Gehäuse nur auf eine definierte Weise erfolgen kann. Die Kontaktbereiche bzw. Kontaktstreifen 24-28 auf der Leiterplatte 18, welche mit den nicht dargestellten Leiterbahnen der Leiterplatte verbunden sind, sind derart angeordnet, dass sich beim Einschieben des Einschubs 11 in das Gehäuse bzw. beim Einschieben des hinteren Bereichs 18' der Leiterplatte 18 in die Buchse 20 eine sichere und definierte Inbetriebsetzung des Speichers bzw. Speicherteiles auf der Leiterplatte ergibt. Zu diesem Zweck sind die Kontaktstreifen teilweise um vorbestimmte Abstände von der Kante des hinteren Bereichs 18' beabstandet, so dass die Kontaktnahme der Streifen 24 - 28 mit den Federn 20' der Buchse 20 beim Einschieben je nach Abstand von der Kante früher oder später erfolgt. Zuerst gelangen die Streifen 24, 25 in Kontakt mit der jeweils zugehörigen Kontaktfeder 20. Mit den Streifen 24, 25 wird die Speisespannung für den Speicherchip auf der Leiterplatte zugeführt. Danach stellt der Streifen 28 Kontakt her, welcher beim Speicherchip ein Zurücksetzen aller Leitungen in einen Ausgangszustand bewirkt (Reset). Der Kontaktstreifen 28 ist nur kurz, so dass sich im vollständig eingeschobenem Zustand der Halterung 11 kein Kontakt mehr der zugehörigen Feder mit dem Streifen 28 ergibt. Der Reset wird also nur als Impuls während des Einschiebens erzeugt. Nachfolgend gelangen die Streifen 26 und 27 zur Kontaktnahme, über welche die Daten- und Adressinformationen an den Speicherchip gelangen. Auf diese Weise ergibt sich eine geordnete, sichere Inbetriebnahme des Speichers beim Einschieben desselben, bzw. bei der Kontaktaufnahme mit der Steuerelektronik (in der Regel einen Mikroprozessor umfassend) auf der Hauptplatine 19. Der oder die Speicherchips auf der Leiterplatte 18 können von beliebigen elektrisch lösch- und programmierbaren Speicherchiparten gebildet werden (EEPROM, Flash-Memory).

Der Einschub mit Bodenteil, Seitenwänden und Stirnwand schützt den Speicher des Rundsteuerempfängers bei der Auswechslung des Einschubs weitgehend gegen Berührung. Es kann aber zusätzlich auch ein Deckel am Einschub vorgesehen sein.

Bevorzugterweise ist die Einschuböffnung im Gehäuse im Bereich der Halteplatte 6 der optischen Schnittstelle angeordnet und wird weiter bevorzugt durch die Stirnwand 21 des Einschubs abgeschlossen. Dadurch ergibt sich einerseits eine kompakte Anordnung und Plazierung des Speicherchips nahe der Schnittstelle sowie andererseits eine für die Bedienungsperson übersichtliche und klare Anordnung.

Der Einschub oder eine andere Art der Anordnung des Speichers könnte indes auch an anderer Stelle des Gehäuses, z.B. seitlich vorgesehen werden. Eine weitere Möglichkeit ist die Ausbildung der Halterung des Speichers in der Grösse und Form ähnlich einem Relaisgehäuse, so dass das Speicherelement anstelle eines der Relais auf einem entsprechend modifizierten Steckplatz 15, 16 oder 17 eingesteckt werden kann. Ein solcher Steckplatz kann auch zusätzlich zu dem Einschub 11 vorgesehen sein und in dem einsteckbaren Gehäuse in Relaisgrösse kann Elektronik für Zusatzfunktionen des Rundsteuerempfängers untergebracht werden, z.B. auch ein zweiter Empfänger zum Empfang eines anderen Telegramms und/oder zur Abgabe eines Rückmeldesignals des Rundsteuerempfängers an das Verteilnetz.

In dem auswechselbaren und über die Schnittstelle programmierbaren Speicher des Rundsteuerempfängers können alle programmierbaren Kundendaten enthalten sein. Der Speicher kann aber auch nur ein Zusatz zu einem nicht auswechselbaren und nicht über die Schnittstelle programmierbaren Speicher, z.B. auf der Hauptplatine 19, sein, welcher einen Teil der Kundendaten enthält, so dass die Kundendaten für den Kunden nur selektiv zugänglich bzw. programmierbar sind, um z.B. gewisse Grunddaten vor der unbeabsichtigten Löschung durch Neuprogrammierung über die Schnittstelle zu schützen.

Der Einschub 11 kann auch weitere Elemente zusätzlich zum Speicher aufnehmen. Z.B. könnte ein programmierbarer Uhrenbaustein in dem Einschub oder auch in dem Einsteckgehäuse für den Relaissteckplatz vorgesehen sein. Mittels der programmierbaren Uhr kann der Rundsteuerempfänger die Funktion einer Schaltuhr übernehmen. Die Uhrzeit und die Zeitprogramme können über die optische Schnittstelle eingegeben bzw. umprogrammiert werden. An der Stirnwand 21 kann eine Flüssigkristallanzeige für die Uhrzeit und allenfalls auch die Schaltprogramme vorgesehen sein. Die Zeitprogramme können natürlich auch im Sinne der vorliegenden Erfindung wahlweise durch Austausch des Speicher- bzw. Uhrenbausteins geändert werden. Bevorzugterweise ist es so, dass der Uhrenbaustein auf der Hauptplatine vorgesehen ist und auf dem auswechselbaren Speicher nur die Zeitprogramme zum zeitabhängigen Schalten abgelegt sind.

Auf der Leiterplatte des Einschubes oder des Einsteckelementes kann auch ein Mikroprozessor angeordnet sein, der einige oder auch alle Steuerfunktionen des Rundsteuerempfängers ausführt. Dadurch kann die ganze Steuerung des Rundsteuerempfängers auf einfache Weise auswechselbar und damit an die jeweiligen technischen Weiterentwicklungen anpassbar sein.

## Patentansprüche

1. Verfahren zur Programmierung eines Rundsteuerempfängers (1), dadurch gekennzeichnet, dass der Speicher oder ein Teil des Speichers des Rundsteuerempfängers, der als austauschbarer Speicher oder Speicherteil (11) ausgestaltet ist, wahlweise entweder als in gewünschter Weise vorprogrammierter Speicher bzw. Speicherteil in den Rundsteuerempfänger eingesetzt wird, oder dass über eine am Rundsteuerempfänger vorgesehene zum Datenaustausch bestimmte Schnittstelle (4) der austauschbare Speicher oder Speicherteil in gewünschter Weise im Rundsteuerempfänger programmiert wird.

2. Verfahren nach Anspruch 1 dadurch gekennzeichnet, dass nur ein vorbestimmter Bereich des Speichers über die Schnittstelle programmierbar ist, welcher insbesondere im austauschbaren Speicherteil eingerichtet ist, um dadurch die Zugänglichkeit der Speicherdaten zu regeln.

3. Verfahren nach Anspruch 1 oder 2, dadurch gekennzeichnet, dass beim Einsetzen des Speichers oder Speicherteils bei diesem nacheinander die Speisespannung angelegt, ein Rücksetzimpuls ausgelöst und nachfolgend die Datenleitungen kontaktiert werden.

4. Verfahren nach einem der Ansprüche 1 bis 3, dadurch gekennzeichnet, dass der Rundsteuerempfänger ferner mit einer Schaltuhr versehen ist, und dass die Programmierung der Zeitsteuerprogramme wahlweise entweder durch Einsetzen eines vorprogrammierten, austauschbaren Speicherteils oder durch Programmierung des im Rundsteuerempfänger eingesetzten Speicherteils über die Schnittstelle des Rundsteuerempfängers erfolgt.

5. Rundsteuerempfänger mit einer Schnittstelle zur Programmierung des Speichers des Rundsteuerempfängers, dadurch gekennzeichnet, dass der Speicher oder ein Teil des Speichers als durch eine Gehäuseöffnung des Rundsteuerempfängers einsetzbarer und wegnehmbarer Speicher oder Speicherteil (11) ausgebildet ist.

6. Rundsteuerempfänger nach Anspruch 5, dadurch gekennzeichnet, dass die Gehäuseöffnung durch einen Deckel abdeckbar ist, insbesondere durch einen die Relais des Rundsteuerempfängers abdeckenden Deckel.

7. Rundsteuerempfänger nach Anspruch 5 oder 6, dadurch gekennzeichnet, dass nur ein vorbestimmter Speicherbereich über die Schnittstelle programmierbar ist, welcher Bereich insbesondere auf dem Speicherteil (11) angeordnet ist.

8. Rundsteuerempfänger nach Anspruch 5 oder 6, dadurch gekennzeichnet, dass das Speicherteil (11) eine an die mit Führungsmitteln versehene Gehäuseöffnung angepasste, verdrehsicher in diese einführbare Halterung (21, 32-35) mit einer darin gehaltenen Leiterplatte (18) umfasst.

9. Rundsteuerempfänger nach einem der Ansprüche 5 bis 8, dadurch gekennzeichnet, dass die Gehäuseöffnung angrenzend an das Fenster (5) der optischen Schnittstelle (4) angeordnet ist.

10. Rundsteuerempfänger nach einem der Ansprüche 5 bis 8, dadurch gekennzeichnet, dass die Gehäuseöffnung mit der Gehäuseausnehmung für die Relaissteckplätze des Rundsteuerempfängers zusammenfällt.

11. Rundsteuerempfänger nach einem der Ansprüche 7 bis 10, dadurch gekennzeichnet, dass die Halterung stirnseitig mit einem Anzeigeelement ausgerüstet ist.

12. Rundsteuerempfänger nach einem der Ansprüche 5 bis 11, dadurch gekennzeichnet, dass mehrere Gehäuseöffnungen zur Aufnahme mehrerer Speicher und/oder Steuerbausteine und/oder Sender-/Empfangsbausteine des Rundsteurempfängers vorgesehen sind.
